# EUROPEAN PATENT APPLICATION

(11) **EP 3 001 936 A1**
(43) Date of publication of application: **06.04.2016**
(21) Application number: 15188023.4
(22) Date of filing: 01.10.2015
(51) Int. Cl.: A47J 31/06, A47J 31/00, A47J 31/50

(54) **FRESH-BREWED COLD BEVERAGE DISPENSING MACHINE**

(30) Priority: 02.10.2014 TW 103134335; 02.10.2014 TW 103217551 U; 09.07.2015 TW 104211081 U
(71) Applicant: Hsu, Chih-Ming, New Taipei City 238 (TW)
(72) Inventor: Hsu, Chih-Ming, New Taipei City 238 (TW)
(74) Representative: Cabinet Chaillot

(57) **Abstract**

A fresh-brewed cold beverage dispensing machine capable of immediately cooling fresh-brewed hot drink into cold drink and quickly dispensing the cold drink includes a hot water supply module (2,200), a brewing tank(3,300), a cooling chamber (4,400) and a cooling module (5,500) for cooling a cooling medium contained in the cooling chamber(4,400). A beverage cooling assembly (6,600) is disposed in the cooling chamber (4,400) and has a beverage transfer path (60) passing through the cooling chamber (4,400). One end of the beverage transfer path (60) is connected to the brewing tank (3,300), while the other end is provided with a beverage supply opening (61, 610) accessible from outer side. A beverage drive module (7) is disposed on the beverage transfer path (60) for urging the hot drink in the brewing tank (3,300) to directly pass through the beverage transfer path (60)and quickly heat-exchange with the cooling medium and discharge from the beverage supply opening (61,610) as cold drink.

## Description

### BACKGROUND OF THE INVENTION

### 1. Field of the Invention

The present invention relates generally to a fresh-brewed cold beverage dispensing machine, which is capable of immediately cooling a fresh-brewed hot drink into cold drink and quickly dispensing the cold drink. The fresh-brewed cold beverage dispensing machine includes a hot water supply module, a brewing tank, a cooling chamber, a cooling module, a cooling coiled tube and a beverage drive module.

### 2. Description of the Related Art

Conventionally, the commercially available cold drinks such as black tea, green tea, milky tea and coffee are sold after brewed. That is, hot water is first poured onto the brewed materials such as tea-leaves, coffee mate, coffee powder or flavors to brew the materials into hot drink. After the hot drink is naturally cooled to a normal-temperature state, icy cubes are added into the drink to form a cold drink. In addition, the cold drink machine often seen in the market has an internal reservoir with refrigeration effect. The previously brewed beverage is poured into the reservoir and preserved therein. The beverage is first cooled into cold drink and then kept in a cooled state for a long time. When supplying the cold drink, the cold drink is discharged from the beverage supply opening of the reservoir into a handheld beverage container to serve.

In the above conventional cold drink technique, the ice cubes can be placed into the beverage only after the previously brewed beverage is cooled. Alternatively, the beverage contained in the reservoir of the cold drink machine is kept refrigerated by the cold drink machine at a low temperature for a long time and ready to serve. The conventional cold drink technique has a shortcoming that the beverage cannot be brewed and immediately cooled and supplied. As a result, during the long-term cooling process, the beverage is more likely to contact external contaminants and spoil. Therefore, it is hard to maintain the hygienic condition of the beverage. Moreover, in order to keep the beverage supplied at a stable low temperature, the beverage in the reservoir must be continuously cooled and refrigerated by a refrigeration device to keep the beverage in a low-temperature state. On the other hand, the reservoir must be non-periodically supplemented with previously brewed fresh beverage to satisfy the requirement of mass supply of the beverage. Under such circumstance, the consumption of the energy for keeping the beverage in the low-temperature state is great and the stability of the supply temperature of the cold drink can be hardly ensured. Furthermore, after the ice cubes are added into the beverage, the ratio of brewed materials will be inevitably changed to affect the taste. Also, the hygiene of the beverage is often affected due to improper reservation of the ice cubes.

Besides, in the conventional cold drink machine, the beverage reserved in the reservoir is naturally discharged to outer side under gravity. Therefore, the reservoir and the refrigeration module inside the cold drink machine must be stacked in sequence. As a result, the cold drink machine often has a huge volume to occupy much room. Moreover, in a natural manner, the beverage can hardly quickly flow out from the cold drink machine so that the flow speed of the cold drink is slow and the supply speed of the cold drink can be hardly promoted. Especially, in the case that the amount of the beverage preserved in the cold drink machine is sufficient, it often takes place that the beverage flows out at a very speed or even the flow of the beverage is interrupted. Therefore, it is quite inconvenient to use the conventional cold drink machine.

### SUMMARY OF THE INVENTION

It is therefore a primary object of the present invention to provide a fresh-brewed cold beverage dispensing machine. By means of the fresh-brewed cold beverage dispensing machine, the fresh-brewed hot drink can be immediately cooled into cold drink and quickly discharged to serve. This eliminates the shortcomings of the conventional cold drink machine that the cold drink is easy to spoil and the hygiene can be hardly ensured. Also, the present invention solves the problems of the conventional cold drink machine that the ice cubes are placed into the beverage to affect the taste, the consumption of energy is great, the beverage is supplied at an unstable temperature, the conventional cold drink machine has a huge volume to occupy much room and the beverage naturally flows out at a slow speed to cause inconvenience in use.

To achieve the above and other objects, the fresh-brewed cold beverage dispensing machine of the present invention includes:
a machine body;
a hot water supply module disposed in the machine body, the hot water supply module having a hot water outlet for discharging hot water and a first control valve for controlling opening/closing of the hot water outlet;
a brewing tank disposed in the machine body, the brewing tank serving to accept the hot water discharged from the hot water outlet, the brewing tank having a receiving space with a capacity for reserving at least one unit amount of supplied hot water at a time;
a cooling chamber disposed in the machine body, a cooling medium being filled in the cooling chamber;
a cooling module disposed in the machine body, the cooling module having a cooling unit connected with the cooling chamber for cooling the cooling medium in the cooling chamber; and
a beverage cooling assembly disposed in the cooling chamber, the beverage cooling assembly having a beverage transfer path passing through the interior of the cooling chamber to heat-exchange with the cooling medium, one end of the beverage transfer path being connected to the brewing tank, the other end of the beverage transfer path being provided with a beverage supply opening accessible from outer side, a second control valve being disposed between the beverage cooling assembly and the brewing tank.

According to the above, in use, the brewed materials such as tea, coffee powder or flavors are first placed into the brewing tank. Then, the hot water of the hot water supply module is discharged from the hot water outlet to right pour onto the brewed materials in the brewing tank. Then, the hot drink in the brewing tank is directly guided into the beverage transfer path of the beverage cooling assembly to pass through the beverage transfer path and discharge from the beverage supply opening to outer side. During this period, the hot drink in the beverage transfer path of the beverage cooling assembly heat-exchanges with the cooling medium in the cooling chamber to form the cold drink, which is discharged from the beverage supply opening to serve. The use of the present invention is quite convenient. In addition, a beverage drive module is disposed on the beverage transfer path for urging the beverage in the brewing tank to quickly pass through the beverage transfer path and discharge from the beverage supply opening as a cold drink. The beverage drive module can forcedly urge the hot drink in the brewing tank to quickly pass through the beverage transfer path of the beverage cooling assembly and discharge from the beverage supply opening as a cold drink. Therefore, the beverage drive module can speed the transfer of the beverage through the machine body and the discharge of the beverage. Accordingly, it is unnecessary to arrange the hot water supply module, the brewing tank, the cooling chamber, the cooling module, the beverage cooling assembly and the beverage drive module of the present invention in a stacked state. Therefore, the volume is greatly minified to save the occupied room.

The present invention eliminates the shortcomings of the conventional cold drink machine that the cold drink is preserved and easy to spoil and the hygiene can be hardly ensured. In the present invention, the fresh-brewed hot drink of the brewing tank can pass through the beverage transfer path of the beverage cooling assembly and quickly heat-exchange with the cooling medium in the cooling chamber to quickly cool into a cold drink. In addition, the brewing tank has a receiving space to provide a unit amount of beverage for serving at a time. Therefore, it is unnecessary to preserve the cold drink in a refrigerated state. Instead, the beverage can be instantly brewed to immediately serve. This ensures hygiene of the beverage and keeps a better and fresh flavor of the beverage. Moreover, by means of quantitative temperature control and cooling path, the beverage can be supplied at a quite stable temperature and the energy can be saved. In addition, the present invention is such structurally designed that the beverage drive module is disposed on the beverage transfer path of the beverage cooling assembly. Accordingly, in the condition that the brewing tank simply provides a unit amount of beverage for serving at a time (as the state of insufficient amount of preserved beverage in the conventional cold drink machine), the power in the machine body can fully automatically urge the unit amount of beverage to discharge for serving. Therefore, the beverage can be quickly discharged to greatly speed the supply of the cold drink and promote the convenience in use and enhance the practical effect.

In the above fresh-brewed cold beverage dispensing machine, the beverage drive module can be a pump. In use, the pump can urge the beverage in the brewing tank to quickly pass through the beverage transfer path and discharge from the beverage supply opening to outer side.

Alternatively, the beverage drive module includes a pressure switch chamber disposed on the beverage transfer path, a negative pressure source in communication with the pressure switch chamber and a positive pressure source in communication with the pressure switch chamber. Each of the beverage transfer path, the negative pressure source and the positive pressure source communicates with the pressure switch chamber via a control valve. The control valve is first sequentially opened and closed to make the negative pressure source communicate with the pressure switch chamber and make the negative pressure source out of communication with the pressure switch chamber and make the brewing tank communicate with the pressure switch chamber via the beverage transfer path. Then, the control valve is sequentially opened and closed to make the positive pressure source communicate with the pressure switch chamber and make the positive pressure source out of communication with the pressure switch chamber and make the pressure switch chamber communicate with the beverage supply opening via the beverage transfer path.

In use, first, the pressure switch chamber communicates with the brewing tank via the beverage transfer path. At the same time, the pressure switch chamber creates negative pressure sucking force due to the operation of the negative pressure source to urge the beverage in the brewing tank to go into the pressure switch chamber via the beverage transfer path. Then, the pressure switch chamber communicates with the beverage supply opening via the beverage transfer path. At the same time, the pressure switch chamber creates a high pressure push force due to the operation of the positive pressure source to urge the beverage in the pressure switch chamber to go through the beverage transfer path and the beverage supply opening and discharge to outer side. Accordingly, in the condition that the brewed materials are not fully resolved in the beverage or the beverage contains some solid materials such as powder granules, fruit granules or fibers, the beverage drive module is able to solve the problem that the solid materials in the beverage are easy to jam on the blades of the pump and hard to clean up.

In the above fresh-brewed cold beverage dispensing machine, the control valves are fixedly arranged on outer wall of the cooling chamber. In this case, the beverage transfer path, the pressure switch chamber, the negative pressure source and the positive pressure source can be more easily connected to the control valves and the installation/uninstallation, replacement and maintenance of these components are facilitated.

In the above fresh-brewed cold beverage dispensing machine, the negative pressure source includes a negative pressure container in communication with the pressure switch chamber and a negative pressure maker in communication with the negative pressure container. The positive pressure source includes a positive pressure container in communication with the pressure switch chamber and a positive pressure maker in communication with the positive pressure container.

In the above fresh-brewed cold beverage dispensing machine, the beverage transfer path can be a cooling coiled tube in a spiral form. Accordingly, the heat-exchange area between the beverage transfer path of the beverage cooling assembly and the cooling medium in the cooling chamber is increased to speed the cooling of the hot drink into cold drink and enhance the cooling efficiency.

In the above fresh-brewed cold beverage dispensing machine, the cooling coiled tube can be formed of a flexible plastic tube in a coiled form. Accordingly, in case the beverage discharged from the cooling coiled tube is not cold enough, the cooling temperature provided by the cooling module for the cooling medium in the cooling chamber can be lowered. However, this will consume more electricity. Alternatively, the length of the metal cooling coiled tube can be increased to promote cooling effect. However, this will greatly increase the manufacturing cost of the metal cooling coiled tube and make it to maintain or replace the metal cooling coiled tube. In addition, the metal cooling coiled tube is apt to rust. To solve the above problems, the above flexible plastic tube, and preferably a silicone tube, can be employed as the cooling coiled tube to lower the manufacturing cost and facilitate the installation/uninstallation, replacement and maintenance.

In the above fresh-brewed cold beverage dispensing machine, the hot water outlet is provided with a hot water supplier extending into the brewing tank. An outer wall of the hot water supplier is formed with multiple water sprinkling holes for radially sprinkling hot water into the brewing tank. Accordingly, when the hot water is discharged from the hot water outlet into the brewing tank, the hot water is radially sprinkled out of the water sprinkling holes of the hot water supplier into the brewing tank to form a surrounding water flow so as to uniformly flush apart and resolve the brewed materials in the brewing tank.

In the above fresh-brewed cold beverage dispensing machine, the hot water outlet communicates with the brewing tank via a control valve for controlling the opening/closing time of the hot water outlet for supplying hot water to the brewing tank.

In the above fresh-brewed cold beverage dispensing machine, a stirrer is arranged on the brewing tank. The stirrer has a stirring member extending into the brewing tank. Accordingly, the stirring member of the stirrer can quickly rotate within the brewing tank to uniformly stir and mix the brewed materials and hot water in the brewing tank.

In the above fresh-brewed cold beverage dispensing machine, the hot water supply module includes a hot water tank connected with the hot water outlet. The hot water tank serves to contain water therein for ready use.

In the above fresh-brewed cold beverage dispensing machine, the cooling module includes a compressor connected wi th the cooling unit. The cooling unit is in contact with a heat-conductive outer wall of the cooling chamber. The compressor serves to urge the coolant to circulate within the cooling unit to heat-exchange with the cooling medium in the cooling chamber through the heat-conductive outer wall thereof. In this case, the cooling medium in the cooling chamber can be cooled.

In the above fresh-brewed cold beverage dispensing machine, a heating ring is wound around outer wall of the brewing tank. In this case, when the hot water and the brewed materials in the brewing tank are mixed to form the hot drink, the heating ring can continuously heat the hot drink in the brewing tank to more fully resolve the brewed materials in the hot drink.

The present invention can be best understood through the following description and accompanying drawings, wherein:

### BRIEF DESCRIPTION OF THE DRAWINGS

Fig. 1 is a front perspective view of a first embodiment of the present invention;
Fig. 2 is a rear perspective view of the first embodiment of the present invention according to Fig. 1;
Fig. 3 is a partially sectional view of the first embodiment of the present invention according to Fig. 1, showing the use of the present invention;
Fig. 4 is a partially sectional view according to Fig. 3, showing that the cold drink is dispensed from the present invention;
Fig. 5 is a perspective assembled view of a second embodiment of the present invention;
Fig. 6 is a perspective exploded view of the second embodiment of the present invention according to Fig. 5;
Fig. 7 is a perspective view according to Fig. 5, seen from another angle;
Fig. 8 is a layout diagram of a part of the second embodiment of the present invention according to Fig. 5;
Fig. 9 is another layout diagram of a part of the second embodiment of the present invention according to Fig. 5;
Fig. 10 is still another layout diagram of a part of the second embodiment of the present invention according to Fig. 5; and
Fig. 11 is still another layout diagram of a part of the second embodiment of the present invention according to Fig. 5.

### DETAILED DESCRIPTION OF THE PREFERRED EMBODIMENTS

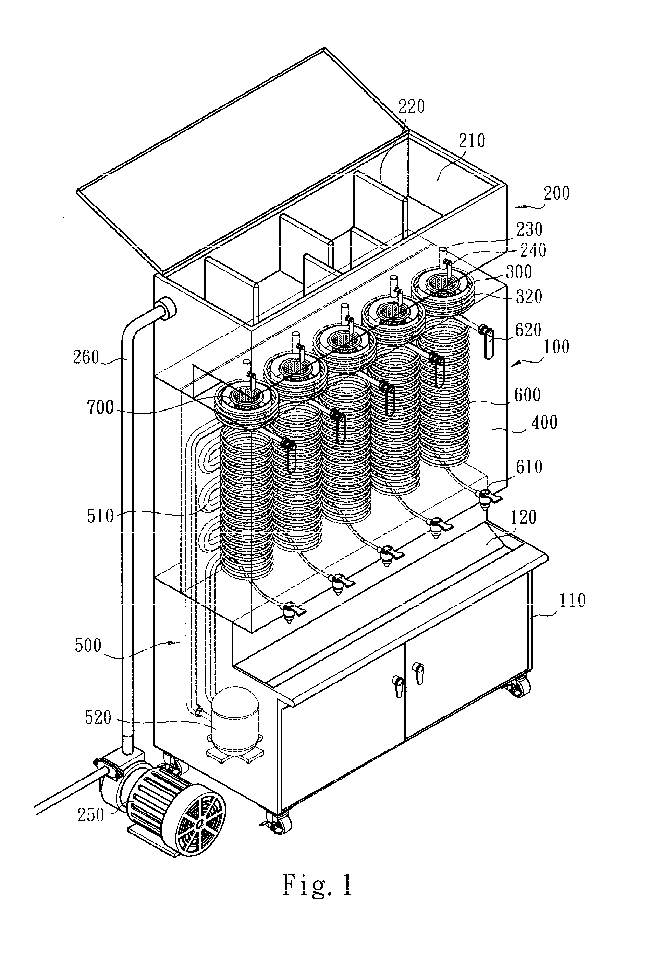

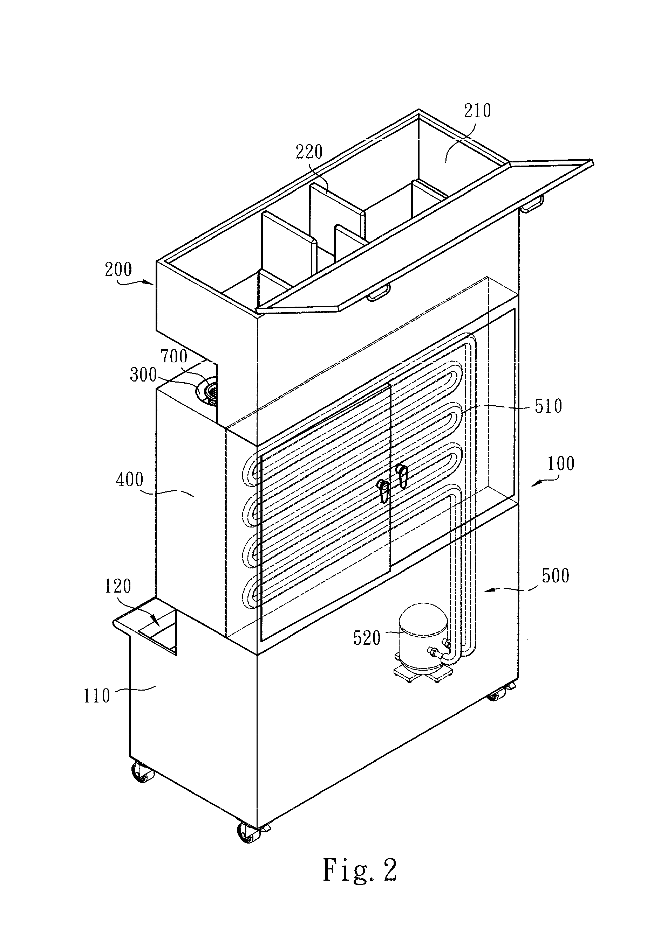

Please refer to Figs. 1 to 3, which show a first embodiment of the present invention. According to the first embodiment, the fresh-brewed cold beverage dispensing machine of the present invention includes a machine body 100, a hot water supply module 200, a brewing tank 300, a cooling chamber 400 and a cooling module 500 arranged in the machine body 100 in an upper-side-to-lower-side sequence. A beverage cooling assembly 600 is further disposed in the machine body 100.

The hot water supply module 200 includes a hot water tank 210, at least one heating component 220 disposed in the hot water tank 210 and a hot water outlet 230 connected to a bottom of the hot water tank 210. The hot water outlet 230 is provided with a first control valve 240. The heating component 220 can be formed of multiple heating units alternately arranged in the hot water tank 210 at intervals. The heating unit can be a heating plate with an electrical heating wire therein. The hot water tank 210 serves to contain water for ready use. The heating components 220 are used to heat the water into hot water. The hot water is discharged from the hot water outlet 230. The heating components 220 are alternately arranged in the hot water tank 210 at intervals so that the heating efficiency is enhanced to save energy. In addition, the hot water supply module 200 includes a pumping motor 250 connected to the hot water tank 210 via several water tubes 260. In the case that the water in the hot water tank 210 is insufficient, the pumping motor 250 serves to pump water into the hot water tank 210 to supplement the hot water tank 210 with water.

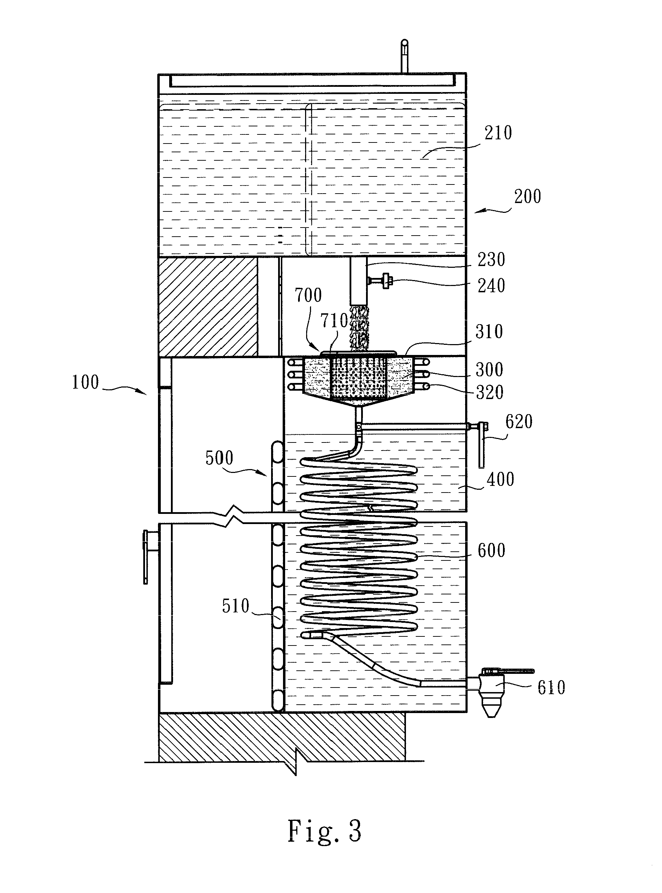

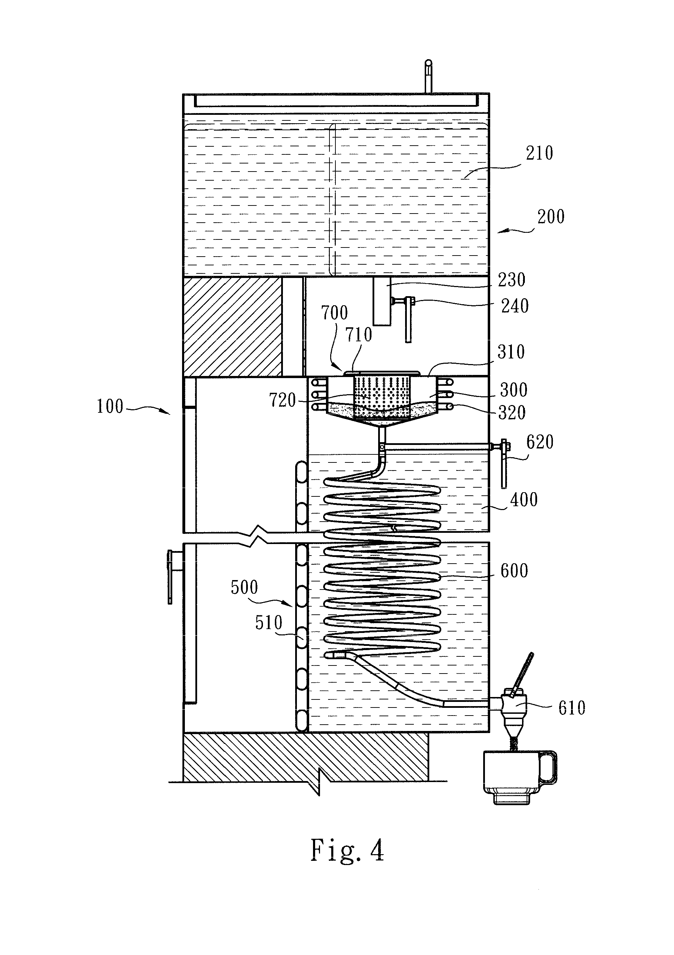

The top section of the brewing tank 300 has a tank opening 310 in alignment with the hot water outlet 230 (as shown in Fig. 3), whereby the brewing tank 300 can receive the hot water discharged from the hot water outlet 230. The brewing tank 300 has a receiving space with a capacity for reserving a unit amount of supplied hot water at a time. A filter cup 700 is disposed between the brewing tank 300 and the hot water outlet 230 and positioned in the brewing tank 300. The filter cup 700 is aligned with the hot water outlet 230 via the tank opening 310 of the brewing tank 300 and immersed in the brewing tank 300. The top section of the filter cup 700 is formed with a cup opening 710 in alignment with the hot water outlet 230. In addition, the filter cup 700 has a wall formed with multiple filtering perforations 720 (as shown in Fig. 4). In order to facilitate operation, the distance between the filter cup 700 and the hot water outlet 230 or the brewing tank 300 is adjustable. In this case, all the operations of immersion, filtering and cleaning can be more conveniently performed.

The cooling chamber 400 is positioned right under the brewing tank 300. A cooling medium is filled in the cooling chamber 400. The cooling medium can be water. The cooling module 500 includes a cooling unit 510 connected with the cooling chamber 400 and a compressor 520 connected with the cooling unit 510. To speak more specifically, the cooling unit 510 can be a coolant tube in which a coolant is filled. The cooling unit 510 contacts a sidewall or multiple sidewalls of the cooling chamber 400 in a winding form. A base seat 110 is disposed under the cooling chamber 400. The compressor 520 is disposed in the base seat 110. Accordingly, the compressor 520 serves to urge the coolant of the cooling unit 510 to heat-exchange with the cooling medium in the cooling chamber 400 through the sidewalls thereof. In this case, the cooling medium in the cooling chamber 400 can be cooled. For example, the water in the cooling chamber 400 can be cooled into icy water and stably kept in a low-temperature state.

The beverage cooling assembly 600 can have the form of a tube passing through the interior of the cooling chamber 400 to heat-exchange with the cooling medium. The top end of the beverage cooling assembly 600 is connected to the bottom section of the brewing tank 300. The bottom end of the beverage cooling assembly 600 is provided with a beverage supply opening 610 accessible from outer side. A second control valve 620 is disposed between the brewing tank 300 and the beverage cooling assembly 600. In a preferred embodiment, the beverage cooling assembly 600 is a cooling coiled tube disposed in the cooling chamber 400. The cooling coiled tube of the beverage cooling assembly 600 has a spiral section or multiple spiral sections passing through the cooling chamber 400. In this case, the heat-exchange area between the beverage cooling assembly 600 and the cooling medium (icy water) in the cooling chamber 400 can be increased to speed the cooling of the hot drink into cold drink and enhance the cooling efficiency.

In this embodiment, there are multiple hot water outlets 230, multiple first control valves 240, multiple beverage cooling assemblies 600 and multiple second control valves 620. The first and second control valves 240, 620 can be manually operable water valves or electrical water valves.

According to the above, in use, the brewed materials such as tea, coffee powder or flavors are first placed into the filter cup 700. Then, the first control valve 240 is opened, permitting the hot water of the hot water supply module 200 to discharge from the hot water outlet 230 and right pour onto the brewed materials in the filter cup 700. The hot water will then resolve the brewed materials to flow into the brewing tank 300 as a hot drink. The brewed materials can be placed into the filter cup 700 manually. Alternatively, a device for automatically dropping the brewed materials into the filter cup 700 can be set on the machine body 100, whereby the brewed materials can be fully automatically placed into the filter cup 700. When the brewing tank 300 fully contains the hot drink, the brewed materials are immersed in the hot drink with the filter cup 700 in the brewing tank 300, whereby the brewed materials can be fully resolved in the hot drink to enhance the flavor of the hot drink. Please refer to Fig. 4. Thereafter, the second control valve 620 can be manually or automatically controlled and opened, permitting the hot drink in the brewing tank 300 to flow into the beverage cooling assembly 600. At this time, the hot drink in the beverage cooling assembly 600 heat-exchanges with the cooling medium (icy water) in the cooling chamber 400 and cools into cold drink. The cold drink is then discharged from the beverage supply opening 610 to serve.

Accordingly, the fresh-brewed hot drink can be quickly cooled into cold drink through the beverage cooling assembly 600 and the cooling chamber 400, whereby a fresh-brewed cold drink can be supplied in a short time to ensure the hygiene of the beverage. Moreover, the beverage is supplied at a quite stable temperature so that the energy can be saved. Furthermore, the filter cup 700 is immersed in the brewing tank 300 so that the brewed materials are immersed in the hot drink to increase the resolution time of the brewed materials in the hot water. In this case, a better flavor can be created.

In a preferred embodiment, a coiled heater 320 with an electrical heating wire therein can be further disposed around outer wall of the brewing tank 300. In this case, when the brewed materials are immersed in the hot drink of the brewing tank 300 with the filter cup 700, the heater 320 can continuously heat the hot drink in the brewing tank 300 to more completely resolve the brewed materials in the hot drink.

In another embodiment, a drain sink 120 is disposed on the machine body 100 under the beverage supply opening 610 for accepting the hot drink leaking from the beverage supply opening 610 so as to ensure sanitation of the environment.

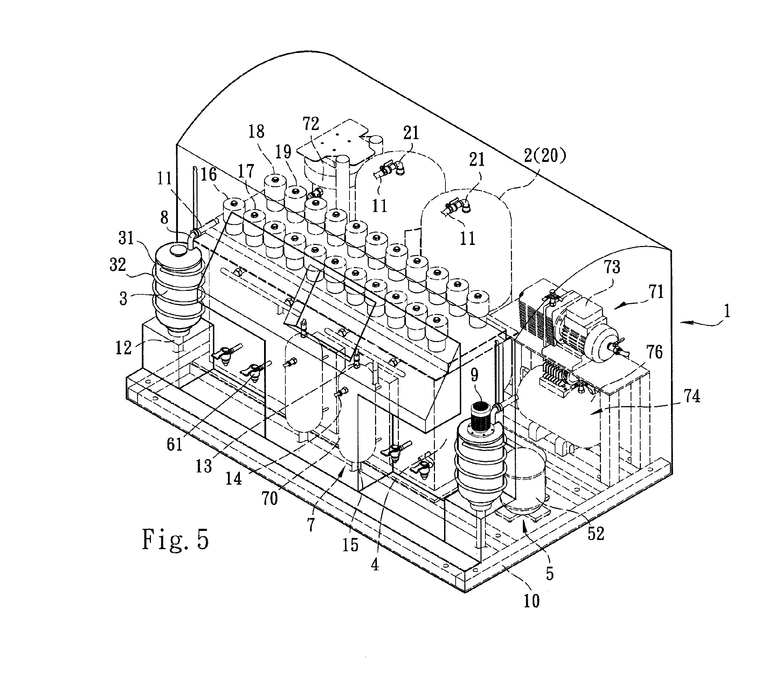

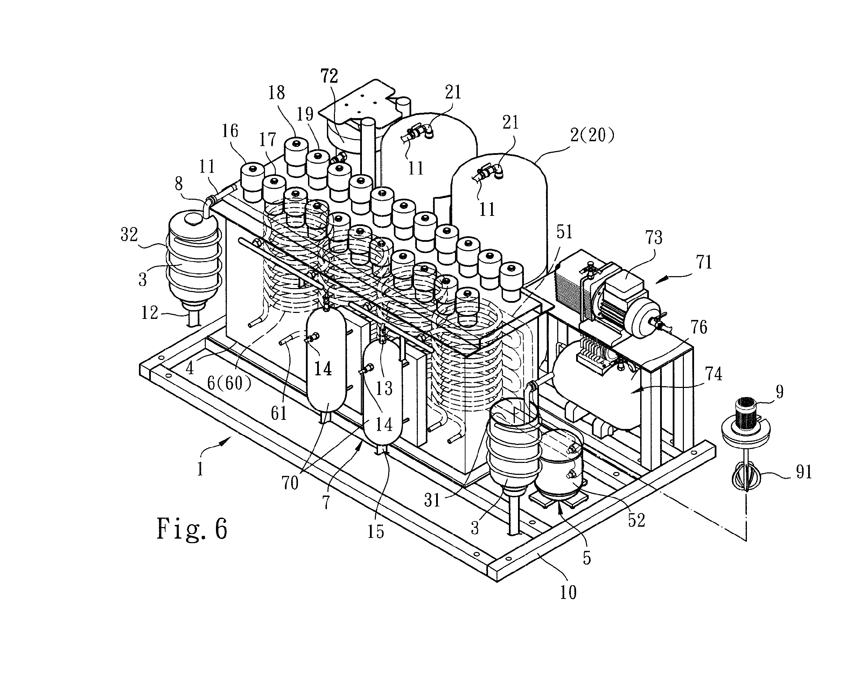

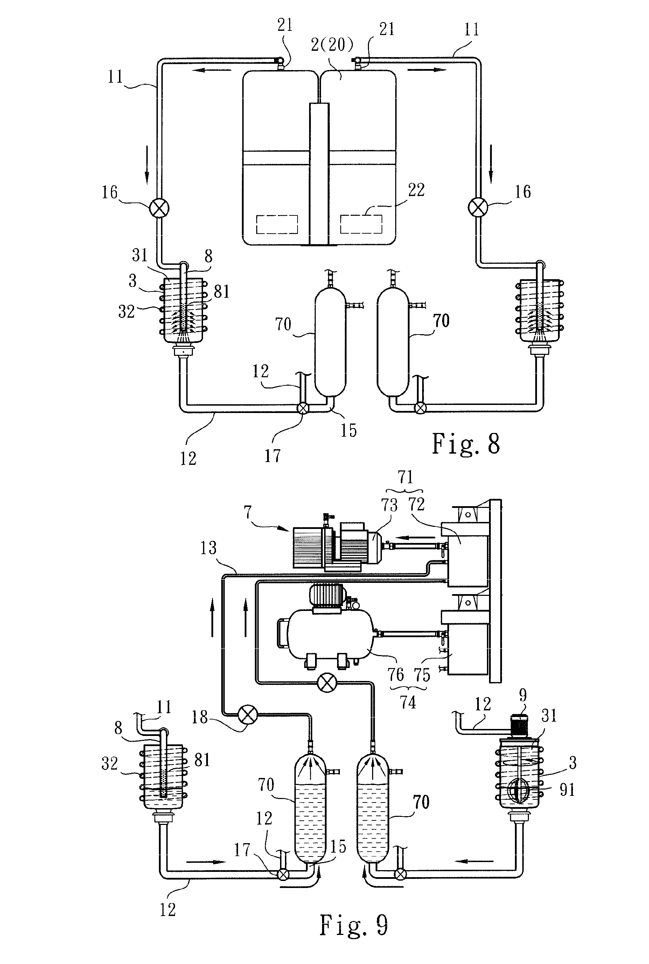

Please now refer to Figs. 5 to 8, which show a second embodiment of the present invention. According to the second embodiment, the fresh-brewed cold beverage dispensing machine of the present invention includes a machine body 1, a hot water supply module 2, a brewing tank 3, a cooling chamber 4, a cooling module 5, a beverage cooling assembly 6 and a beverage drive module 7 arranged in the machine body 1. The hot water supply module 2 has a hot water outlet 21 from which hot water can be discharged. The hot water supply module 2 further includes a hot water tank 20 connected with the hot water outlet 21 and a heater 22 disposed in the hot water tank 20 (as shown in Fig. 8). The hot water tank 20 serves to contain water for ready use. The heater 22 serves to heat the water in the hot water tank 20 into hot water. In addition, the hot water supply module 2 further includes a pumping motor (not shown) connected to the hot water tank 20 via several water tubes. In the case that the water in the hot water tank 20 is insufficient, the pumping motor serves to pump water into the hot water tank 20 to supplement the hot water tank 210 with water for heating.

The brewing tank 3 has a tank opening 31 openable to upper side. The tank opening 31 of the brewing tank 3 is connected to the hot water outlet 21 via a first water tube 11, whereby the brewing tank 3 can accept the hot water discharged from the hot water outlet 21. The brewing tank 3 has a receiving space with a capacity for reserving a unit amount of supplied beverage at a time. In addition, a first control valve 16 is disposed on the first water tube 11. The hot water outlet 21 communicates with the brewing tank 3 through the first control valve 16. The first control valve 16 serves to control the opening/closing time of the hot water outlet 21 for supplying hot water to the brewing tank 3.

As shown in Figs. 5 to 8, a cooling medium is filled in the cooling chamber 4. The cooling medium can be water or other cooling liquid. The cooling module 5 includes a cooling unit 51 connected with the cooling chamber 4 and a compressor 52 connected with the cooling unit 51. To speak more specifically, the cooling unit 51 can be a coolant tube in which a coolant is filled. The cooling unit 51 (coolant tube) contacts a heat-conductive outer sidewall or multiple heat-conductive outer sidewalls of the cooling chamber 4 in a winding form. Accordingly, the compressor 52 serves to urge the coolant to circulate within the cooling unit 51 (coolant tube) to heat-exchange with the cooling medium in the cooling chamber 4 through the heat-conductive outer sidewalls thereof. In this case, the cooling medium in the cooling chamber 4 can be cooled. For example, the water in the cooling chamber 4 can be cooled into icy water and stably kept in a low-temperature state.

The beverage cooling assembly 6 can have the form of a tube passing through the interior of the cooling chamber 4 as a beverage transfer path 60. The beverage in the beverage transfer path 60 can heat-exchange wi th the cooling medium in the cooling chamber 4. One end of the beverage transfer path 60 is connected to the brewing tank 3 via a second water tube 12. The other end of the beverage transfer path 60 has a beverage supply opening 61 accessible from outer side. In a preferred embodiment, the beverage transfer path 60 is a cooling coiled tube disposed in the cooling chamber 4. The cooling coiled tube can have a spiral form. In this case, the heat-exchange area between the beverage transfer path 60 of the beverage cooling assembly 6 and the cooling medium (icy water) in the cooling chamber 4 can be increased to speed the cooling of the hot drink into cold drink and enhance the cooling efficiency.

The beverage drive module 7 is disposed on the beverage transfer path 60, especially on the second water tube 12 between the brewing tank 3 and the beverage cooling assembly 6 (cooling coiled tube) for urging the beverage in the brewing tank 3 to quickly pass through the second water tube 12 and the beverage transfer path 60 to discharge from the beverage supply opening 61 to outer side of the machine body 1. In this embodiment, there are multiple hot water supply modules 2, multiple brewing tanks 3, multiple beverage cooling assemblies 6 and multiple beverage drive modules 7. The hot water supply modules, brewing tanks, cooling chamber 4, cooling module 5, beverage cooling assemblies 6 and multiple beverage drive modules 7 are disposed on the top section of a base seat 10 of the machine body 1 on the same plane.

As shown in Fig. 8, in use, the brewed materials such as tea, coffee mate, coffee powder or flavors are first placed into the brewing tank 3 through the tank opening 31. Then, the hot water of the hot water supply module 2 flows out of the hot water outlet 21 and goes through the first water tube 11 and the first control valve 16 into the brewing tank 3. At this time, the hot water passes through the tank opening 31 to downward right pour onto the brewed materials in the brewing tank 3. The hot water will then resolve the brewed materials to form a hot drink. Then, the beverage drive module 7 urges the hot drink in the brewing tank 3 to quickly flow through the second water tube 12 into the beverage transfer path 60 of the beverage cooling assembly 6 (as shown in Figs. 9 to 11) and quickly pass through the beverage transfer path 60 to discharge from the beverage supply opening 61 to outer side. During this period, the hot drink in the beverage transfer path 60 (cooling coiled tube) of the beverage cooling assembly 6 heat-exchanges with the cooling medium (water) in the cooling chamber 4 and is quickly cooled into a cold drink. Then the cold drink is discharged from the beverage supply opening 61 to serve. Accordingly, the present invention can be very conveniently used to quickly supply the beverage.

It should be noted that the beverage drive module 7 can forcedly urge the hot drink in the brewing tank 3 to quickly pass through the beverage transfer path 60 of the beverage cooling assembly 6 and discharge from the beverage supply opening 61 as a cold drink. Therefore, the beverage drive module 7 can speed the transfer of the beverage through the machine body 1. Accordingly, it is unnecessary to stack the hot water supply module 2, the brewing tank 3, the cooling chamber 4, the cooling module 5, the beverage cooling assembly 6 and the beverage drive module 7 of the present invention. Instead, these components can be positioned on the same plane to greatly minify the volume and save the arrangement space occupied by the machine body 1.

It should be also noted that the present invention is able to quickly cool the fresh-brewed hot drink into cold drink so as to eliminate the shortcomings of the conventional device that the cold drink is preserved and easy to spoil and the hygiene can be hardly ensured. In the present invention, the fresh-brewed hot drink of the brewing tank 3 will pass through the beverage transfer path 60 of the beverage cooling assembly 6 and quickly heat-exchange with the cooling medium in the cooling chamber 4 to quickly cool into a cold drink. In addition, the brewing tank 3 has a receiving space to provide a unit amount of beverage for serving at a time. Therefore, it is unnecessary to preserve the cold drink in a refrigerated state. Instead, the beverage can be instantly brewed to immediately serve. This ensures hygiene of the beverage without using any ice cube and keeps a better flavor of the beverage. Moreover, the beverage can be supplied at a quite stable temperature and the energy can be saved.

Especially, the present invention is such structurally designed that the beverage drive module 7 is disposed on the beverage transfer path 60 of the beverage cooling assembly 6. Accordingly, in the condition that the brewing tank 3 simply provides a unit amount of beverage for serving at a time (as the state of insufficient amount of preserved beverage in the conventional device), the power in the machine body 1 can fully automatically urge the unit amount of beverage to discharge for serving. Therefore, the beverage can be quickly discharged to greatly speed the supply of the cold drink and promote the convenience in use and enhance the practical effect.

According to the above arrangement, the fresh-brewed hot drink can be quickly cooled into cold drink to serve. This eliminates the shortcomings of the conventional cold drink machine that the cold drink is easy to spoil and the hygiene can be hardly ensured. Also, the present invention solves the problems of the conventional cold drink machine that the ice cubes are placed into the beverage to affect the taste, the consumption of energy is great, the beverage is supplied at an unstable temperature, the conventional cold drink machine has a huge volume to occupy much room and the beverage naturally flows out at a slow speed to cause inconvenience in use.

In a preferred embodiment, the beverage drive module 7 can be a pump (such as water pump). In use, the pump can urge the beverage in the brewing tank 3 to quickly pass through the beverage transfer path 60 and discharge from the beverage supply opening 61. Accordingly, in the condition that the brewed materials are fully resolved in the beverage or the beverage contains no solid material such as powder granule, fruit granule or fiber, the water pump can be used as the beverage drive module 7.

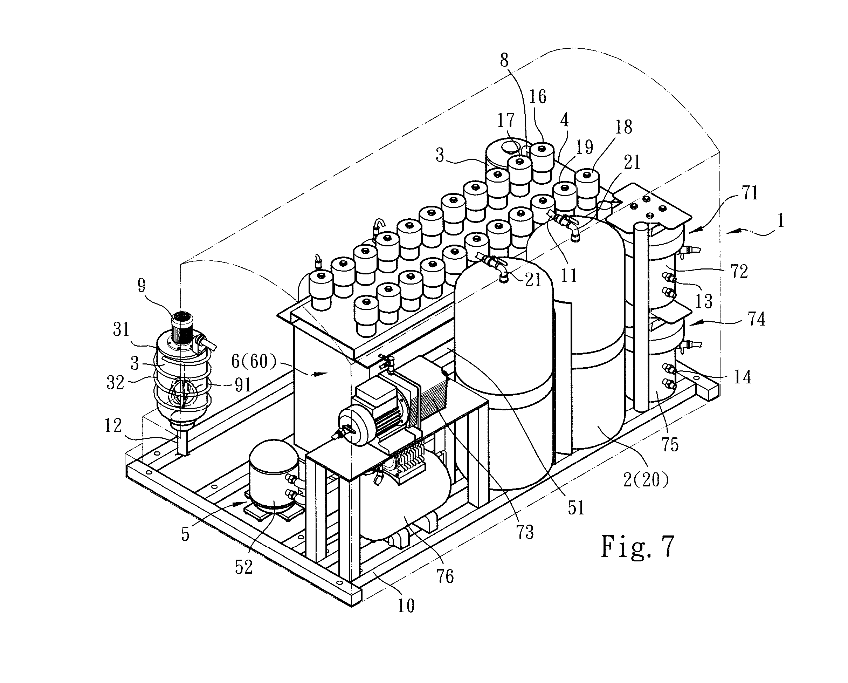

Referring to Figs. 5 and 7, in another embodiment, the beverage drive module 7 includes a pressure switch chamber 70 (such as air pressure switch chamber), a negative pressure source 71 (such as negative pressure air source) and a positive pressure source 74 (such as high pressure air source). The negative pressure source 71 communicates with the pressure switch chamber 70 via a first pressure tube 13. The positive pressure source 74 communicates with the pressure switch chamber 70 via a second pressure tube 14. The pressure switch chamber 70 communicates with the second water tube 12 between the brewing tank 3 and the beverage cooling assembly 6 via a manifold 15. The pressure switch chamber 70 is disposed on the beverage transfer path 60 via the manifold 15 and the second water tube 12. A second control valve 17 is connected between the second water tube 12 and the manifold 15, whereby the beverage transfer path 60 communicates with the pressure switch chamber 70 via the second control valve 17. A third control valve 18 is disposed on the first pressure tube 13, whereby the negative pressure source 71 communicates with the pressure switch chamber 70 via the third control valve 18. A fourth control valve 19 is disposed on the second pressure tube 14, whereby the positive pressure source 74 communicates with the pressure switch chamber 70 via the fourth control valve 19.

To speak more specifically, the negative pressure source 71 includes a negative pressure container 72 (such as vacuum container) and a negative pressure maker 73 (such as a vacuumizer) in communication with the negative pressure container 72. The negative pressure container 72 communicates with the pressure switch chamber 70 via the first pressure tube 13 and the third control valve 18. The negative pressure maker 73 can make negative pressure in the negative pressure container 72, whereby the interior of the negative pressure container 72 can create negative pressure sucking force. The positive pressure source 74 includes a positive pressure container 75 (such as high pressure container) and a positive pressure maker 76 (such as an air compressor) in communication with the positive pressure container 75. The positive pressure container 75 communicates with the pressure switch chamber 70 via the second pressure tube 14 and the fourth control valve 19. The positive pressure maker 76 can input positive pressure medium (such as high pressure air) to the interior of the positive pressure container 75, whereby the interior of the positive pressure container 75 can create positive pressure push force.

Referring to Fig. 9, first, the third control valve 18 is opened, permitting the negative pressure container 72 of the negative pressure source 71 to communicate with the pressure switch chamber 70 via the first pressure tube 13, whereby the pressure switch chamber 70 creates negative pressure sucking force. At the same time, the second control valve 17 is opened, permitting the brewing tank 3 to communicate with the pressure switch chamber 70 via the second water tube 12 and the manifold 15, whereby the negative pressure sucking force of the pressure switch chamber 70 sucks the hot drink in the brewing tank 3 to quickly go into the pressure switch chamber 70. Then, the third control valve 18 is closed to make the negative pressure container 72 out of communication with the pressure switch chamber 70 via the first pressure tube 13, whereby the negative pressure sucking force of the pressure switch chamber 70 is released. At the same time, the second control valve 17 is closed to make brewing tank 3 out of communication with the pressure switch chamber 70 via the second water tube 12 and the manifold 15, whereby the hot drink is temporarily sealed in the pressure switch chamber 70.

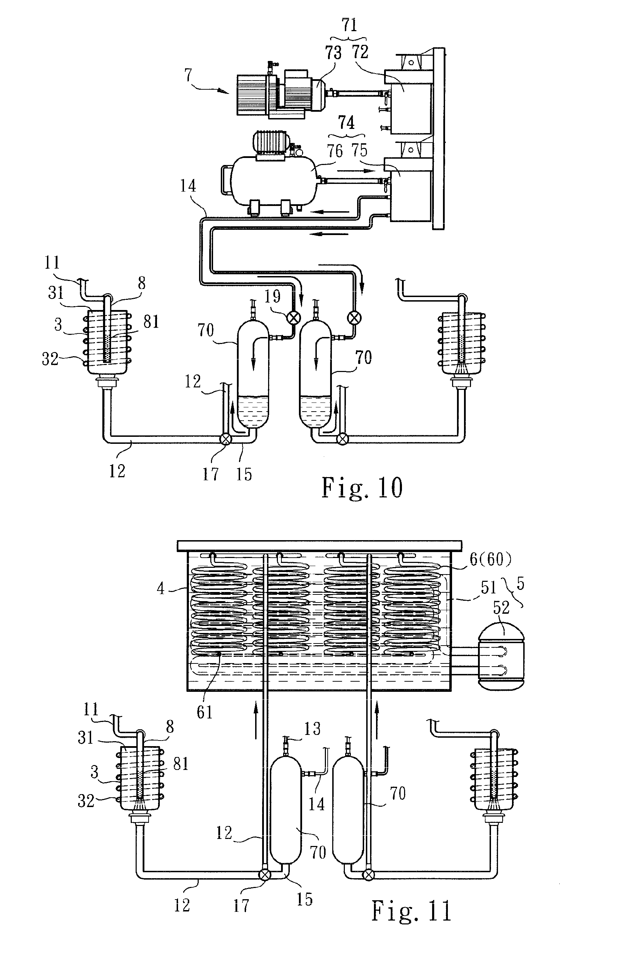

As shown in Figs. 10 and 11, thereafter, the fourth control valve 19 is opened, permitting the positive pressure container 75 of the positive pressure source 74 to communicate with the pressure switch chamber 70 via the second pressure tube 14, whereby the positive pressure medium in the positive pressure container 75 goes into the pressure switch chamber 70 and the interior of the pressure switch chamber 70 creates a positive pressure push force. At the same time, the second control valve 17 is opened, permitting the pressure switch chamber 70 to communicate with the beverage cooling assembly 6 (cooling coiled tube) and the beverage supply opening 61 via the manifold 15 and the second water tube 12, whereby the positive pressure push force in the pressure switch chamber 70 urges the hot drink in the pressure switch chamber 70 to quickly go into and pass through the beverage cooling assembly 6 and the beverage supply opening 61. Then, the fourth control valve 19 is closed to make the positive pressure container 75 out of communication with the pressure switch chamber 70 via the second pressure tube 14, whereby the positive pressure push force in the pressure switch chamber 70 is released. Simultaneously, the second control valve 17 is closed to make the pressure switch chamber 70 out of communication with the beverage cooling assembly 6 via the manifold 15 and the second water tube 12.

Accordingly, in the condition that the brewed materials are not fully resolved in the beverage or the beverage contains some solid materials such as powder granules, fruit granules or fibers, in case the water pump is used as the beverage drive module 7, the solid materials in the beverage are easy to jam on the blades of the pump and hard to clean up. Under such circumstance, the beverage drive module 7 including the pressure switch chamber 70, the negative pressure source 71 and the positive pressure source 74 can be employed.

As shown in Figs. 5 to 7, in amodified embodiment, the first, second, third and fourth control valves 16, 17, 18, 19 are fixedly arranged on outer wall of the top section of the cooling chamber 4. In this case, the beverage transfer path 60, the pressure switch chamber 70, the negative pressure source 71 and the positive pressure source 74 can be more easily connected to the first, second, third and fourth control valves 16, 17, 18, 19 via the first water tube 11, the second water tube 12, the first pressure tube 13, the second pressure tube 14 and the manifold 15. Moreover, the installation/uninstallation, replacement and maintenance of these components are facilitated.

In still another embodiment, the cooling coiled tube of the beverage cooling assembly 6 can be formed of a flexible plastic tube in a coiled form, and preferably a silicone tube. In case the beverage discharged from the cooling coiled tube is not cold enough, the cool ing temperature provided by the cooling module 5 for the cool ing medium in the cooling chamber 4 can be lowered. However, this will consume more electricity. Alternatively, the length of the metal cooling coiled tube can be increased to promote cooling effect. However, this will greatly increase the manufacturing cost of the metal cooling coiled tube and make it to maintain or replace the metal cooling coiled tube. In addition, the metal cooling coiled tube is apt to rust. To solve the above problems, the above flexible plastic tube can be employed as the cooling coiled tube to lower the manufacturing cost and facilitate the installation/uninstallation, replacement and maintenance.

In still another modified embodiment, the hot water outlet 21 is provided with a hot water supplier 8 extending into the brewing tank 3. The hot water supplier 8 can have the form of a tube. The outer circumferential wall of the hot water supplier 8 is formed with multiple water sprinkling holes 81 for radially sprinkling hot water into the brewing tank 3. Accordingly, when the hot water is discharged from the hot water outlet 21 into the brewing tank 3, the hot water is radially sprinkled out of the water sprinkling holes 81 of the hot water supplier 8 into the brewing tank 3 to form a surrounding water flow so as to uniformly flush apart and resolve the brewed materials in the brewing tank 3. Alternatively, a stirrer 9 can be arranged on the brewing tank 3. The stirrer 9 has a stirring member 91 extending into the brewing tank 3. Accordingly, the stirring member 91 of the stirrer 9 can quickly rotate within the brewing tank 3 to uniformly stir and mix the brewed materials and hot water in the brewing tank 3.

In still another modified embodiment, a heater 32 is wound around outer wall of the brewing tank 3. In this case, when the hot water and the brewed materials in the brewing tank 3 are mixed to form the hot drink, the heater 32 can continuously heat the hot drink in the brewing tank 3 to more fully resolve the brewed materials in the hot drink.

The above embodiments are only used to illustrate the present invention, not intended to limit the scope thereof. Many modifications of the above embodiments can be made without departing from the spirit of the present invention.

## Claims

1. A fresh-brewed cold beverage dispensing machine comprising:
a machine body (1, 100);
a hot water supply module (2, 200) disposed in the machine body (1, 100), the hot water supply module (2, 200) having a hot water outlet (21, 230) for discharging hot water and a first control valve (16, 240) for controlling opening/closing of the hot water outlet (21, 230), **characterized in**
a brewing tank (3, 300) disposed in the machine body (1, 100), the brewing tank (3, 300) serving to accept the hot water discharged from the hot water outlet (21, 230), the brewing tank (3, 300) having a receiving space with a capacity for reserving a unit amount of supplied hot water at a time;
a cooling chamber (4, 400) disposed in the machine body (1, 100), a cooling medium being filled in the cooling chamber (4, 400);
a cooling module (5, 500) disposed in the machine body (1, 100), the cooling module (5, 500) having a cooling unit (51, 510) connected with the cooling chamber (4, 400) for cooling the cooling medium in the cooling chamber (4, 400); and
a beverage cooling assembly (6, 600) disposed in the cooling chamber (4, 400) to heat-exchange with the cooling medium, one end of the beverage cooling assembly (6, 600) being connected to the brewing tank (3, 300), the other end of the beverage cooling assembly (6, 600) being provided with a beverage supply opening (61, 610) accessible from outer side, a second control valve (17, 620) being disposed between the beverage cooling assembly (61, 610) and the brewing tank (3, 300).

2. The fresh-brewed cold beverage dispensing machine as claimed in claim 1, wherein the beverage cooling assembly (6, 600) has a beverage transfer path (60) passing through the interior of the cooling chamber (4, 400) to heat-exchange with the cooling medium, one end of the beverage transfer path (60) being connected with the brewing tank (3, 300), the other end of the beverage transfer path (60) being provided with a beverage supply opening (61, 610) accessible from outer side, the fresh-brewed cold beverage dispensing machine further comprising a beverage drive module (7) disposed on the beverage transfer path (60) for urging the beverage in the brewing tank (3, 300) to quickly pass through the beverage transfer path (60) and discharge from the beverage supply opening (61, 610).

3. The fresh-brewed cold beverage dispensing machine as claimed in claim 2, wherein the beverage drive module (71) is a pump.

4. The fresh-brewed cold beverage dispensing machine as claimed in claim 2, wherein the beverage drive module (7) includes a pressure switch chamber (70) disposed on the beverage transfer path (60), a negative pressure source (71) in communication with the pressure switch chamber (70) and a positive pressure source (74) in communications with the pressure switch chamber (70).

5. The fresh-brewed cold beverage dispensing machine as claimed in claim 4, wherein in the beverage transfer path (60), the negative pressure source (71) communicates with the pressure switch chamber (70) via a third control valve (18) and the positive pressure source (74) communicates with the pressure switch chamber (70) via a fourth control valve (19), the brewing tank (3, 300) communicating with the pressure switch chamber (70) via the beverage transfer path (60), the pressure switch chamber (70) communicating with the beverage supply opening (61, 610) via the beverage transfer path (60).

6. The fresh-brewed cold beverage dispensing machine as claimed in claim 4 or 5, wherein the negative pressure source (71) includes a negative pressure container (72) in communication with the pressure switch chamber (70) and a negative pressure maker (73) in communication with the negative pressure container (72).

7. The fresh-brewed cold beverage dispensing machine as claimed in claim 4 or 5, wherein the positive pressure source (74) includes a positive pressure container (75) in communication with the pressure switch chamber (70) and a positive pressure maker (76) in communication with the positive pressure container (75).

8. The fresh-brewed cold beverage dispensing machine as claimed in any of claims 1 to 7, wherein a filter cup (700) is disposed between the brewing tank (3, 300) and the hot water outlet (21, 230).

9. The fresh-brewed cold beverage dispensing machine as claimed in any of claims 1 to 8, wherein the hot water supply module (2, 200) includes a hot water tank (20, 210) connected with the hot water outlet (21, 230) and at least one heating component (220) disposed in the hot water tank (20, 210).

10. The fresh-brewed cold beverage dispensing machine as claimed in any of claims 1 to 9, wherein the cooling module (5,500) includes a compressor (52, 520) connected with the cooling unit (51, 510), the cooling unit (51, 510) being in contact with a heat-conductive outer wall of the cooling chamber (4, 400).

11. The fresh-brewed cold beverage dispensing machine as claimed in any of claims 1 to 10, wherein the beverage cooling assembly (6, 600) has a cooling coiled tube disposed in the cooling chamber (4, 400).

12. The fresh-brewed cold beverage dispensing machine as claimed in claim 11, wherein the cooling coiled tube is formed of a plastic tube in a coiled form.

13. The fresh-brewed cold beverage dispensing machine as claimed in any of claims 1 to 12, wherein a heater (22, 32, 320) is disposed around an outer wall of the brewing tank (3,300) in a coiled form.

14. The fresh-brewed cold beverage dispensing machine as claimed in any of claims 1 to 13, wherein a drain sink (120) is disposed on the machine body (1, 100) and positioned under the beverage supply opening (61, 610).

15. The fresh-brewed cold beverage dispensing machine as claimed in any of claims 1 to 14, wherein the hot water outlet (21, 230) is provided with a hot water supplier (8) extending into the brewing tank (3,300), the hot water supplier (8) having an outer wall formed with multiple water sprinkling holes (81) for radially sprinkling hot water into the brewing tank (3,300).

16. The fresh-brewed cold beverage dispensing machine as claimed in any of claims 1 to 15, wherein a stirrer (9) is arranged on the brewing tank (3, 300), the stirrer (9) having a stirring member (91) extending into the brewing tank (3,300).
